# EUROPEAN PATENT SPECIFICATION

(11) **EP 2 542 056 B1**
(45) Date of publication and mention of the grant of the patent: **25.11.2020**
(21) Application number: 11750168.4
(22) Date of filing: 28.02.2011
(51) Int. Cl.: A01N 25/28, A01N 43/80, A01P 13/00

(54) **HERBICIDAL COMPOSITION AND METHOD OF USE THEREOF**
HERBIZIDE ZUSAMMENSETZUNG UND VERFAHREN ZU IHRER VERWENDUNG
COMPOSITION À EFFET DÉSHERBANT ET PROCÉDÉ D'UTILISATION ASSOCIÉ

(30) Priority: 02.03.2010 GB 201003503
(43) Date of publication of application: 09.01.2013
(73) Proprietor: Rotam Agrochem International Co., Ltd, Chai Wan, Hong Kong (CN)
(72) Inventor: BRISTOW, James, Timothy, Chai Wan, Hong Kong, (CN)
(74) Representative: Akers, Noel James
(86) International application number: PCT/CN2011/071366
(87) International publication number: WO 2011/107015

(56) References cited:
- WO-A1-99/38611
- WO-A2-2009/135492
- CN-A- 1 343 092
- US-A- 4 936 901
- US-B2- 6 797 277

## Description

The present invention relates to a composition comprising a herbicide and to the use of the composition. In particular, the present invention concerns an extruded granular composition comprising a herbicidally active component, in particular a certain isoxazolidinone.

It is known that certain isoxazolidinones are active as herbicides and are useful in the control of unwanted plant growth. One particular isoxazolidinone of commercial importance is 2-(2-chlorophenyl)methyl-4,4-dimethyl-3-isoxazolidinone, known in the art and referred to hereinafter by the common name clomazone.

A problem with certain isoxazolidinone herbicides, in particular with clomazone, arises from the relatively high volatility of the compounds. In conventional formulations of such active ingredients, the compounds have the tendency to vapourise rapidly from the surfaces to which the formulations are applied. The vapourised active ingredient is susceptible to drift from the target area or locus, with the result that plants outside the target area may suffer adverse effects from the compounds. Consequently, there is a need to avoid such secondary effects of volatile active compounds, such as clomazone.

To reduce the rapid vapourisation of the active compound, it is known to encapsulate clomazone, in particular to encapsulate a liquid formulation of the compound within a polymer. Such microencapsulation of clomazone is taught, for example, in US 4,405,357. The use of microcapsules allow the active ingredient to be held in relatively large liquid droplets and reduces the rate at which the active ingredient vapourises after application. This in turn reduces the secondary effects of the active ingredient on plants outside the target area or locus.

Problems have been found with certain known microencapsulated forms of clomazone. In particular, it has been found that the presence of significant quantities of moisture at the target site, for example water absorbed by fertilizer present at the time of application, can increase the volatility of the active ingredient even when microencapsulated as described above.

This problem is addressed in US 6,797,277, which proposes an extruded granular formulation for delivering active compounds with relatively high volatilities, in particular clomazone. In particular, US 6,797,277 proposes a process for making an extruded granule for delivering an agrochemical, in particular clomazone, to a crop, in which clomazone is blended with a solid carrier to form a blended composition, which is extruded through a die to form granules. The clomazone may or may not be microencapsulated Suitable solid carriers disclosed are aluminium silicate, kaolin, montmorillinite, attapulgite, Black Charm Clay, bentonite, corn cob, sand, biodac, starch matrix, fluid earth carbon, activated carbon, or other solid diluents. Aluminium silicate is a preferred solid carrier. The granules may comprise a binder. The binder may be included in the composition comprising clomazone and the carrier before extrusion. Alternatively, the binder may be applied to the granules after extrusion, for example by way of a spray coating. The binder may be a lignosulfonate, molasses, polysaccharides, methylcellulose, acrylic polymers, bentonite, rendering fat or water soluble glues. Further, the granules may comprise a dispersant. The dispersant, if present, may be included in the composition before extrusion. Alternatively, the dispersant may be applied to the granules after extrusion, for example by spay coating. The dispersant may be a lignosulfonate, condensed naphthalene sulfonates, swelling bentonite and acid/base effervescent systems. US 6,797,277 appears to favour the use of both a lignosulfonate as the binder and the dispersant.

The sole example of an actual composition disclosed in US 6,797,277 comprises an aluminium silicate clay solid carrier, microencapsulated clomazone, a lignosufonate binder, a lignosulfonate dispersant and water. The granular composition is described as being prepared by spraying the microencapsulated clomazone onto the clay and blending to form a uniform mixture. The resulting mixture was extruded to form granules. The resulting granules were coated with a solution of the binder and the dispersant. Finally, the granules were dried to a moisture content of from 5 to 6%.

There is a need for an improved formulation of isoxazolidinones, in particular clomazone, that addresses the problems of high volatility of the active ingredient, while avoiding the problems associated with granular formulations, such as the formation of fines or dust resulting from attrition of the granules during manufacture, transport and use.

According to a the present invention there is provided a method for preparing a formulation comprising clomazone, the method comprising the steps of:
combining microcapsules having a polymer shell and a core comprising clomazone, a solid carrier and a lignosulfonate to form a mixture;
forming granules from the resulting mixture;
applying a composition comprising a lignosulfonate to coat the granules; and
drying the thus coated granules.

The method of this aspect of the present invention provides an improved granular formulation of clomazone, that is particularly stable, more resistant to abrasion, while effective in delivering the active ingredient to the target plants once the formulation is applied at a locus, with minimal drift of the active ingredient to plants outside the locus of application.

The method comprises forming a mixture of microencapsulated clomazone, as described in more detail hereinafter, a solid carrier and a lignosulfonate. The solid carrier may be any suitable material that is susceptible to forming granules, in particular by extrusion, and is acceptable for application to plants at a locus, once the finished formulation is applied. The solid carrier is generally inert, that is does not adversely affect the activity of clomazone or affect the action of other components of the finished granules. Suitable carriers include compositions comprising one or more metal salts, in particular salts of metals from Groups IA, MA and MIA of the Periodic Table of Elements. The carrier may also comprise a transition metal salt. Preferred metal salts include those of calcium, magnesium and aluminium. Any suitable salt may be employed, in particular oxides, carbonates, sulphates, and silicates. Suitable carrier materials include clays, such as kaolinites, smectites, montmorillinites, bentonites, chlorites, sepiolites and atapulgites. These and other suitable solid carriers are known in the art and are generally commercially available.

The solid carrier may be present in any suitable amount, in particular forming from 20 to 98% by weight of the final product, preferably from 40 to 95% by weight, more preferably from 50 to 90% by weight of the finished granules.

The mixture may further comprise one or more binders. The binder serves to adhere or bind the solid particles present in the final product and provides integrity to the granules, preventing them from crumbling and the like. The binder may be any suitable material and suitable binder materials are known in the art and are commercially available. Suitable binders include flours, starches, gums, alcohols, lipids, cellulose derivatives, alginates, and wood extracts, such as lignin and lignin derivates, for example lignosulfonates.

The binder is present in the mixture in sufficient amount to provide the extruded granules with integrity and will vary according to the properties of the binder being used. Typically, the binder is present in the final granular product in an amount of from 0.2 to 15% by weight, preferably from 0.5 to 10% by weight, more preferably from 1 to 5% by weight.

Depending upon the composition and properties of the other components of the mixture to be formed into granules and the method of granulation, the mixture may further comprise a solvent. Suitable solvents include both organic and inorganic liquids. Water is a particularly convenient solvent. Other suitable solvents include organic liquids, such as alcohols, aromatic solvents and the like. Again, suitable solvents are known in the art and are commercially available.

The amount of solvent present in the mixture will depend upon the properties and composition of the other components. For example, certain microencapsulated formulations of clomazone comprise the microcapsules in suspension in a solvent, in particular in aqueous suspension. Accordingly, solvent will be provided to the mixture by the clomazone formulation being used. The solvent should be present in an appropriate amount to allow the mixture to be formed into granules, for example to be extruded, in particular from 1 to 20% by weight of the mixture, preferably from 2 to 10% by weight, more preferably from 2 to 5% by weight.

The mixture to be extruded may consist of microencapsulated clomazone, one or more solid carriers, and one or more binders. However, the mixture may comprise further components. In particular, the mixture to be extruded may comprise one or more dispersants. The dispersant is provided to increase the rate at which the granules disintegrate once they are delivered to the locus being treated and contacted with water, to release the active ingredient. The dispersant may comprise an anionic dispersant material, a non-ionic dispersant material, or a mixture of the two. Suitable dispersants for inclusion in the granules are known in the art and are commercially available. Examples of suitable dispersants include sulphonated and unsulphonated lignin polymers, sulphonated naphthalene compounds and polyacrylate salts. Sulfonated lignin dispersants are preferred anionic dispersant materials. A preferred non-ionic dispersant is naphthalene sulfonate.

If present, the mixture may contain any suitable amount of the dispersant to ensure sufficient disintegration of the granules upon application, in particular from 0.5 to 20% by weight of the finished granules, preferably from 1 to 15% by weight, more preferably from 2 to 10% by weight.

The components of the mixture may be combined in any order and mixed. Suitable techniques for mixing the components and apparatus for performing the mixing are known in the art, with suitable equipment being commercially available. In addition, or alternatively, the components may be mixed as a result of the action of the process for forming the mixture into granules. In one embodiment, the mixture is formed into granules by extrusion, as discussed below, in which case the components may be added directly to the inlet or feed hopper of the extruder, with the mixing taking place during the extrusion process.

In the following step of the method of this invention, the mixture described above is formed into granules. The granules may be formed by any suitable technique. Suitable techniques are known in the art and include granulation, compaction, spray drying, fluid bed agglomeration and extrusion. Extrusion is a particular preferred manner of forming the mixture into granules. Suitable extrusion techniques and apparatus are well known in the art, with the equipment being commercially available.

Once the granules are formed, they may be treated to apply additional binder to the exterior of the granules. The binder may comprise the same or different materials to the binder included in the initial mixture. Suitable binder materials are as described above. The binder may be applied to the granules by any suitable means. Preferably, the binder is formed as a solution, suspension or slurry of the binder material in a suitable solvent. The solvent is most preferably water. The granules may be contacted with the solution, suspension or slurry of the binder by any suitable means. Spraying is a particularly preferred means to apply the additional binder material to the outer surface of the granules.

The amount of binder material applied to the granules in this step will depend upon such factors as the amount of binder present in the initial mixture used to prepare the granules and the final amount of binder to be present in the finished granules. The portion of the total binder content of the granules that is applied in this step may be from 5 to 75%, preferably from 10 to 60%, more preferably from 20 to 50% by weight.

As an alternative to including a dispersant in the mixture used to form the granules or in addition thereto, the granules may have additional dispersant applied to their outer surface. The additional dispersant may be applied together with the binder or as a separate step. Suitable dispersant materials are as described above. The dispersant applied to the granules in this step may be the same or different to any dispersant present in the mixture used to form the granules. The dispersant may be applied to the granules by any suitable means. Preferably, the dispersant is formed as a solution, suspension or slurry of the dispersant material in a suitable solvent. The solvent is most preferably water. The granules may be contacted with the solution, suspension or slurry of the dispersant by any suitable means. Spraying is a particularly preferred means to apply the additional dispersant material to the outer surface of the granules.

The amount of dispersant material applied to the granules in this step will depend upon such factors as the amount of dispersant present in the initial mixture used to prepare the granules and the final amount of dispersant to be present in the finished granules. The portion of the total dispersant content of the granules that is applied in this step may be from 0 to 100%, more particularly from 5 to 75%, preferably from 10 to 60%, more preferably from 20 to 50% by weight.

After coating with additional binder and any dispersant, if applied, the resulting granules are dried, as required, in order to remove any solvent present in the granules to a suitable level. Suitable techniques for drying the granules and drying apparatus are known in the art, with suitable drying equipment being commercially available. The granules may be dried to remove the solvent to a suitable amount, in particular to provide the finished granules with a solvent content of from 0.5 to 15% by weight, more preferably from 1 to 10% by weight.

As noted above, the granules prepared by the method of the present invention most preferably comprise a dispersant. As also noted above, the dispersant may be included in the initial mixture used to prepare the granules. However, it has been found that it is particularly advantageous if the dispersant is added both to the initial mixture and to the granules, once they have been formed.

Accordingly, the present invention provides a method for preparing a formulation comprising clomazone, the method comprising the steps of:
combining microcapsules having a polymer shell and a core comprising clomazone, a solid carrier and a sulfonated lignin or naphthalene sulphonate to form a mixture;
forming granules from the resulting mixture;
applying a composition comprising a sulfonated lignin or naphthalene sulphonate to coat the granules; and
drying the thus coated granules.

The method of this aspect of the present invention provides an improved granular formulation of clomazone, that is particularly stable and more effective in delivering the active ingredient to the target plants once the formulation is applied at a locus, with minimal drift of the active ingredient to plants outside the locus of application.

The method comprises forming a mixture of microencapsulated clomazone, as described in more detail hereinafter, a solid carrier and a sulfonated lignin or naphthalene sulphonate. The solid carrier may be any suitable material that is susceptible to forming granules, in particular by extrusion, as hereinbefore described.

The solid carrier may be present in any suitable amount, in particular forming from 20 to 98% by weight of the final product, preferably from 40 to 95% by weight, more preferably from 50 to 90% by weight of the finished granules.

The mixture may further comprise a dispersant. The dispersant is provided to increase the rate at which the granules disintegrate once they are delivered to the locus being treated and contacted with water, to release the active ingredient. The dispersant may comprise an anionic dispersant material, a non-ionic dispersant material, or a mixture of the two. Suitable dispersants for inclusion in the granules are known in the art and are as described above.

The mixture contains any suitable amount of the dispersant to ensure sufficient disintegration of the granules upon application, in particular from 0.5 to 20% by weight of the finished granules, preferably from 1 to 15% by weight, more preferably from 2 to 10% by weight.

The mixture to be extruded may consist of microencapsulated clomazone, one or more solid carriers, and one or more dispersants. However, the mixture may comprise further components. In particular, the mixture to be extruded may comprise one or more binders. The binder serves to adhere or bind the solid particles present in the final product and provides integrity to the granules, preventing them from crumbling and the like. The binder may be any suitable material and suitable binder materials are as described above.

If present, the amount of binder in the mixture is sufficient to provide the extruded granules with integrity and will vary according to the properties of the binder being used. Typically, the binder is present in the final granular product in an amount of from 0.2 to 15% by weight, preferably from 0.5 to 10% by weight, more preferably from 1 to 5%) by weight.

Depending upon the composition and properties of the other components of the mixture to be formed into granules and the method of granulation, the mixture may further comprise a solvent. Suitable solvents are as described above.

The solvent should be present in an appropriate amount to allow the mixture to be formed into granules, for example to be extruded, in particular from 1 to 20% by weight of the mixture, preferably from 2 to 10% by weight, more preferably from 2 to 5%) by weight.

The components of the mixture may be combined in any order and mixed. Suitable techniques for mixing the components and apparatus for performing the mixing are known in the art, with suitable equipment being commercially available. In addition, or alternatively, the components may be mixed as a result of the action of the process for forming the mixture into granules. In one embodiment, the mixture is formed into granules by extrusion, as discussed below, in which case the components may be added directly to the inlet or feed hopper of the extruder, with the mixing taking place during the extrusion process.

In the following step of the method of this aspect of the invention, the mixture described above is formed into granules. The granules may be formed by any suitable technique. Suitable techniques are known in the art and include granulation, compaction, spray drying, fluid bed agglomeration and extrusion. Extrusion is a particular preferred manner of forming the mixture into granules. Suitable extrusion techniques and apparatus are well known in the art, with the equipment being commercially available.

Once the granules are formed, they may be treated to apply additional dispersant to the exterior of the granules. The dispersant may comprise the same or different materials to the dispersant included in the initial mixture. Suitable dispersant materials are as described above. The dispersant may be applied to the granules by any suitable means. Preferably, the dispersant is provided as a solution, suspension or slurry of the dispersant material in a suitable solvent. The solvent is most preferably water. The granules may be contacted with the solution, suspension or slurry of the dispersant by any suitable means. Spraying is a particularly preferred means to apply the additional dispersant material to the outer surface of the granules.

The amount of dispersant material applied to the granules in this step will depend upon such factors as the amount of dispersant present in the initial mixture used to prepare the granules and the final amount of dispersant to be present in the finished granules. The portion of the total dispersant content of the granules that is applied in this step may be from 5 to 75%, preferably from 10 to 60%, more preferably from 20 to 50% by weight.

As an alternative to including a binder in the mixture used to form the granules or in addition thereto, the granules may have additional binder applied to their outer surface. The additional binder may be applied together with the dispersant or as a separate step. Suitable binder materials are as described above. The binder applied to the granules in this step may be the same or different to any binder present in the mixture used to form the granules. The binder may be applied to the granules by any suitable means. Preferably, the binder is formed as a solution, suspension or slurry of the binder material in a suitable solvent. The solvent is most preferably water. The granules may be contacted with the solution, suspension or slurry of the binder by any suitable means. Spraying is a particularly preferred means to apply the additional binder material to the outer surface of the granules.

The amount of binder material applied to the granules in this step will depend upon such factors as the amount of binder present in the initial mixture used to prepare the granules and the final amount of binder to be present in the finished granules. The portion of the total binder content of the granules that is applied in this step may be from 0 to 100%, more particularly from 5 to 75%, preferably from 10 to 60%, more preferably from 20 to 50% by weight.

After coating with additional dispersant, and optionally additional binder material, the resulting granules are dried, as required, in order to remove any solvent present in the granules to a suitable level. Suitable techniques for drying the granules and drying apparatus are known in the art, with suitable drying equipment being commercially available. The granules may be dried to remove the solvent to a suitable amount, in particular to provide the finished granules with a solvent content of from 0.5 to 15% by weight, more preferably from 1 to 10% by weight.

As noted above, it can be advantageous to provide both binder and dispersant materials to the granules in two stages, that is first including the materials in the mixture prior to forming the granules and second applying additional material to the outer surface of the granules.

Accordingly, the present disclosure also provides a method for preparing a formulation comprising clomazone, the method comprising the steps of:
combining microcapsules having a polymer shell and a core comprising clomazone, a solid carrier, a binder and a dispersant to form a mixture;
forming granules from the resulting mixture;
applying a composition comprising a dispersant to coat the granules;
applying a composition comprising a binder to coat the granules; and
drying the thus coated granules.

The method of this aspect of the present disclosure provides an improved granular formulation of clomazone, that is particularly stable, resistant to abrasion and formation of dust and fines, and more effective in delivering the active ingredient to the target plants once the formulation is applied at a locus, with minimal drift of the active ingredient to plants outside the locus of application.

Details of the constituent components of the granules and the manner of preparing the granules are as hereinbefore described. As noted, the granules, once prepared are provided with both additional binder material and additional dispersant material on their outer surface. The additional binder and dispersant may be applied in a single stage or in separate treatments of the granules.

The granules prepared by the methods of the present invention comprise clomazone as an active ingredient, in particular clomazone in a microencapsulated form. Formulations comprising microencapsulated active agrochemical components, in particular clomazone, are known in the art and are commercially available. The microencapsulated clomazone comprises microcapsules having a polymer shell and a core, the core containing clomazone, optionally with one or more other components, such as a solvent and other adjuvents or excipients typically employed in agrochemical formulations. The polymer shell may be of any suitable polymer material and the microcapsules formed by any suitable method. Preferably, the polymer shell is formed using an interfacial polymerisation technique. Examples of suitable polymers include polyamides, polyesters, polyurethanes and polyureas. The polymer is preferably a polyurea, in particular a polyurea formed from the reaction of one or more isocyanate compounds and one or more amine compounds. Such reactions are known in the art and the reactants known and commercially available.

Examples of microencapsulation suitable for use in preparing the clomazone for inclusion in the granules of the present invention are disclosed in EP 0 719 087, EP 0 792 100, EP 0 854 675, EP 1 104 991, EP 1 164 849, EP 1 404 176, EP 1 928 593, EP 2 133 140, WO 01/24631, WO 03/099005, WO 96/22159, WO 2007/072046, WO 2007/101019, WO 2009/00545, and WO 2009/086914.

The granules prepared by the methods of the present invention may comprise further components, in addition to those discussed above. Examples of such components include those components commonly included in agrochemical formulations, in particular granular agrochemical formulations, and include one or more components selected from biocides, adjuvants, and activity modifiers, including safeners and synergising agents of the active ingredients. Such components are commercially available and their use is known in the art. The additional components may be included in the granules at any convenient stage in the method of preparation. In particular, the additional components mentioned above may be included in the initial mixture and/or applied to the granules after their formation in a single or separate treatments, as hereinbefore described.

As noted, clomazone is an active ingredient in the formulations prepared by the methods of the present invention. The finished granules may contain clomazone as the sole active component. Alternatively, the finished granules may contain one or more additional pesticidally active components, including one or more fungicides, insecticides and/or herbicides. The additional active ingredients, if present, may be included in the initial mixture used to prepare the granules and/or applied to granules after preparation. The additional active ingredients may be present within the microcapsules, together with clomazone, and/or may be present in the bulk or continuous phase of the granules.

The present invention also provides a granule composition comprising an agrochemically active component, in particular clomazone, obtainable by a method as hereinbefore described.

In addition, the present invention provides the use of granules prepared by a method of the present invention in the treatment of unwanted plant growth.

Further, the present invention provides a method of controlling plant growth at a locus, the method comprising applying to the locus a granule prepared by a method of the present invention.

The present invention will be further illustrated by way of the following examples. Percentages indicated in the examples are all on the basis of the weight of the finished granules, unless otherwise stated.

### EXAMPLE 1

Granules of Formulation A have the following composition:

| | |
|---|---|
| Aluminium Silicate (Carrier) | 82% |
| Microencapsulated clomazone (Active Ingredient) | 14% |
| Sulphonated lignin (Binder) | 1.5% |
| Sodium naphthalene sulphonate (Dispersant) | 2% |
| Water | 0.5% |

The microencapsulated clomazone is a formulation containing microcapsules having a polyurea shell prepared by the interfacial condensation polymerisation of a polyisocyanate with a polyamine and containing 25% by weight of clomazone, 7% by weight polymer and the remainder an inert organic solvent.

The method of preparation of the granules of Formulation A is as follows:
The aluminium silicate, microencapsulated clomazone and 50% of the binder material are combined to form a mixture. Sufficient water is included in the mixture to allow the mixture to be extruded. The mixture is fed to the feed hopper of a screw extruder and extruded through a plate to form granules having a nominal size of 3 mm. An aqueous suspension of the remaining binder material and the dispersant is applied to the granules by spraying, to evenly coat the outer surface of the granules. Thereafter, the resulting granules are dried in an oven to remove excess water.

The granules have a high resistance to abrasion and low formation of dust and fines. When applied to plants at a locus, the granules disperse clomazone upon contact with water with minimal drift of clomazone out of the target locus.

### EXAMPLE 2

Granules of Formulation B have the following composition:

| | |
|---|---|
| Aluminium Silicate (Carrier) | 81% |
| Microencapsulated clomazone (Active Ingredient) | 14% |
| Sulphonated lignin (Binder) | 1.5% |
| Sodium naphthalene sulphonate (Dispersant) | 2% |
| Water | 1.5% |

The microencapsulated clomazone is a formulation containing microcapsules having a polyurea shell prepared by the interfacial condensation polymerisation of a polyisocyanate with a polyamine and containing 25% by weight of clomazone, 7% by weight polymer and the remainder an inert organic solvent.

The method of preparation of the granules of Formulation B is as follows:
The aluminium silicate, microencapsulated clomazone and 50% of the dispersant material are combined to form a mixture. Sufficient water is included in the mixture to allow the mixture to be extruded. The mixture is fed to the feed hopper of a screw extruder and extruded through a plate to form granules having a nominal size of 3 mm. An aqueous suspension of the remaining dispersant material and the binder is applied to the granules by spraying, to evenly coat the outer surface of the granules. Thereafter, the resulting granules are dried in an oven to remove excess water.

The granules have a high resistance to abrasion and low formation of dust and fines. When applied to plants at a locus, the granules disperse clomazone upon contact with water with minimal drift of clomazone out of the target locus.

### EXAMPLE 3

Granules of Formulation C have the following composition:

| | |
|---|---|
| Aluminium Silicate (Carrier) | 79.5% |
| Microencapsulated clomazone (Active Ingredient) | 16% |
| Sulphonated lignin (Binder) | 2% |
| Sodium naphthalene sulphonate (Dispersant) | 2% |
| Water | 0.5% |

The microencapsulated clomazone is a formulation containing microcapsules having a polyurea shell prepared by the interfacial condensation polymerisation of a polyisocyanate with a polyamine and containing 25% by weight of clomazone, 7% by weight polymer and the remainder an inert organic solvent.

The method of preparation of the granules of Formulation C is as follows:
The aluminium silicate, microencapsulated clomazone, 50% of the binder material and 50% of the dispersant material are combined to form a mixture. Sufficient water is included in the mixture to allow the mixture to be extruded. The mixture is fed to the feed hopper of a screw extruder and extruded through a plate to form granules having a nominal size of 3 mm. An aqueous suspension of the remaining binder material and the remaining dispersant is applied to the granules by spraying, to evenly coat the outer surface of the granules. Thereafter, the resulting granules are dried in an oven to remove excess water.

The granules have a high resistance to abrasion and low formation of dust and fines. When applied to plants at a locus, the granules disperse clomazone upon contact with water with minimal drift of clomazone out of the target locus.

## Claims

1. A method for preparing a formulation comprising clomazone, the method comprising the steps of:
(i) combining microcapsules having a polymer shell and a core comprising clomazone, a solid carrier and a sulfonated lignin or naphthalene sulphonate to form a mixture;
(ii) forming granules from the resulting mixture;
(iii) applying a composition comprising a sulfonated lignin or naphthalene sulphonate to coat the granules; and
(iv) drying the thus coated granules.

2. The method according to claim 1, wherein the carrier comprises a metal salt or a clay, preferably a salt of a metal from Groups IA, IIA or IIIA of the Periodic Table of the Elements, more preferably a salt of calcium, magnesium or aluminium, and wherein the metal salt is an oxide, carbonate, sulphate, or silicate.

3. The method according to claim 1 or 2, wherein the carrier is provided in step (i) in an amount to form from 20 to 98% by weight of the finished granules.

4. The method according to any of claims 1 to 3, wherein the finished granules comprise from 0.5 to 20% by weight of a sulfonated lignin or naphthalene sulphonate.

5. The method according to any of claims 1 to 4, wherein the mixture formed in step (i) further comprises a solvent, and preferably the solvent is water.

6. The method according to any of claims 1 to 5, wherein the mixture formed in step (i) further comprises a binder, which comprises a material selected from flours, starches, gums, alcohols, lipids, cellulose derivatives, alginates, wood extracts, lignin and lignin derivatives.

7. The method according to any of claims 1 to 6, wherein the granules are formed in step (ii) by a procedure comprising granulation, compaction, spray drying, fluid bed agglomeration or extrusion, and preferably are formed by extrusion of the mixture.

8. The method according to any of claims 1 to 7, wherein the granules are treated in step (iii) with a solution, slurry or suspension of the sulfonated lignin or naphthalene sulphonate in a solvent, and preferably the solvent is water.

9. The method according to any of claims 1 to 8, wherein the sulfonated lignin or naphthalene sulphonate applied to the granules in step (iii) is the same as the sulfonated lignin or naphthalene sulphonate included in the mixture in step (i) and/or wherein from 5 to 75% of the total content of the sulfonated lignin or naphthalene sulphonate in the finished granules is applied in step (iii).

10. The method according to any of claims 1 to 9, wherein a binder is applied to the granules in step (iii), and optionally wherein a binder is provided in the mixture of step (i) and the binder applied in step (iii) is the same as the binder provided in step (i), and preferably wherein from 5 to 75% by weight of the binder present in the finished granules is provided in step (iii).

11. The method according to any of claims 1 to 10, wherein the binder is present in the finished granules in an amount of from 0.2 to 15% by weight.

12. The method according to any of claims 1 to 11, wherein the granules are dried in step (iv) to provide the finished granules with a solvent content of from 0.5 to 15% by weight.

13. A method for preparing a formulation comprising clomazone according to any preceding claim, the method comprising the steps of:
(i) combining microcapsules having a polymer shell and a core comprising clomazone, a solid carrier and a lignosulfonate to form a mixture;
(ii) forming granules from the resulting mixture;
(iii) applying a composition comprising a lignosulfonate to coat the granules; and
(iv) drying the thus coated granules.

14. The method according to claim 13, when dependent from claim 1, wherein the lignosulfonate is present in an amount of from 0.2 to 15% by weight of the finished granules.

15. The method according to claim 13 or claim 14, wherein the mixture formed in step (i) further comprises a dispersant selected from sulphonated and unsulphonated lignin polymers, sulphonated naphthalene compounds and polyacrylate salts.

16. The method according to any of claims 13 to 15, wherein the granules are treated in step (iii) with a solution, slurry or suspension of the lignosulfonate material in a solvent, and preferably the solvent is water.

17. The method according to any of claims 13 to 16, wherein from 5 to 75% of the total lignosulfonate content of the finished granules is applied in step (iii).

18. The method according to any of claims 13 to 17, wherein a dispersant is applied to the granules in step (iii), and optionally wherein a dispersant is provided in the mixture of step (i) and the dispersant applied in step (iii) is the same as the dispersant provided in step (i) and preferably wherein from 5 to 75% by weight of the dispersant present in the finished granules is provided in step (iii).

19. The method according to any of claims 13 to 18, wherein the finished granules comprise from 0.5 to 20% by weight of dispersant.

20. A granular formulation comprising clomazone obtainable by the method of any preceding claim.

21. The use of a granular formulation prepared by the method of any of claims 1 to 19 in the treatment of unwanted plant growth.

22. A method for controlling plant growth at a locus, the method comprising applying to the locus granules prepared by a method according to any of claims 1 to 19.

## Patentansprüche

1. Verfahren zur Herstellung einer Formulierung, die Clomazon umfasst, wobei das Verfahren die folgenden Schritte umfasst:
(i) Kombinieren von Mikrokapseln, die eine Polymerschale und einen Kern, Clomazon umfassend, einen festen Träger und ein sulfoniertes Lignin oder Naphthalinsulfonat aufweisen, um ein Gemisch zu bilden;
(ii) Bilden von Granulaten aus dem resultierenden Gemisch;
(iii) Auftragen einer Zusammensetzung, die ein sulfoniertes Lignin oder Naphthalinsulfonat umfasst, um die Granulate zu überziehen; und
(iv) Trocknen der so überzogenen Granulate.

2. Verfahren nach Anspruch 1, wobei der Träger ein Metallsalz oder einen Ton, vorzugsweise ein Salz eines Metalls aus Gruppen IA, IIA oder IIIA des Periodensystems der Elemente, bevorzugter ein Salz von Kalzium, Magnesium oder Aluminium, umfasst; und
wobei das Metallsalz ein Oxid, Carbonat, Sulfat oder Silikat ist.

3. Verfahren nach Anspruch 1 oder 2, wobei in Schritt (i) der Träger in einer Menge bereitgestellt wird, um von 20 bis 98 Gew.-% der Fertiggranulate zu bilden.

4. Verfahren nach einem der Ansprüche 1 bis 3, wobei die Fertiggranulate von 0,5 bis 20 Gew.-% eines sulfonierten Lignins oder Naphthalinsulfonats umfassen.

5. Verfahren nach einem der Ansprüche 1 bis 4, wobei das in Schritt (i) gebildete Gemisch weiter ein Lösemittel umfasst, und das Lösemittel vorzugsweise Wasser ist.

6. Verfahren nach einem der Ansprüche 1 bis 5, wobei das in Schritt (i) gebildete Gemisch weiter ein Bindemittel umfasst, das ein Material umfasst, das aus Mehlen, Stärken, Gummis, Alkoholen, Lipiden, Cellulosederivaten, Alginaten, Holzextrakten, Lignin und Ligninderivaten ausgewählt ist.

7. Verfahren nach einem der Ansprüche 1 bis 6, wobei in Schritt (ii) die Granulate durch eine Prozedur gebildet werden, die Granulierung, Verdichtung, Sprühtrocknung, Wirbelbett-Agglomeration oder Extrusion umfasst, und vorzugsweise durch Extrusion des Gemischs gebildet werden.

8. Verfahren nach einem der Ansprüche 1 bis 7, wobei in Schritt (iii) die Granulate mit einer Lösung, Aufschlämmung oder Aufschwemmung des sulfonierten Lignins oder Naphthalinsulfonats in einem Lösemittel behandelt werden, und das Lösemittel vorzugsweise Wasser ist.

9. Verfahren nach einem der Ansprüche 1 bis 8, wobei das in Schritt (iii) auf die Granulate aufgetragene sulfonierte Lignin oder Naphthalinsulfonat dasselbe ist wie das in Schritt (i) im Gemisch eingeschlossene sulfonierte Lignin oder Naphthalinsulfonat und/oder wobei von 5 bis 75 % des Gesamtgehalts des sulfonierten Lignins oder Naphthalinsulfonats in den Fertiggranulaten in Schritt (iii) aufgetragen wird.

10. Verfahren nach einem der Ansprüche 1 bis 9, wobei in Schritt (iii) ein Bindemittel auf die Granulate aufgetragen wird, und wobei wahlweise ein Bindemittel im Gemisch von Schritt (i) bereitgestellt wird und das in Schritt (iii) aufgetragene Bindemittel dasselbe ist wie das in Schritt (i) bereitgestellte Bindemittel, und wobei vorzugsweise von 5 bis 75 Gew.-% des in den Fertiggranulaten vorliegenden Bindemittels in Schritt (iii) bereitgestellt wird.

11. Verfahren nach einem der Ansprüche 1 bis 10, wobei das Bindemittel in den Fertiggranulaten in einer Menge von 0,2 bis 15 Gew.-% vorliegt.

12. Verfahren nach einem der Ansprüche 1 bis 11, wobei in Schritt (iv) die Granulate getrocknet werden, um die Fertiggranulate mit einem Lösemittelgehalt von 0,5 bis 15 Gew.-% bereitzustellen.

13. Verfahren zum Herstellen einer Formulierung, die Clomazon umfasst, nach einem der vorstehenden Ansprüche, wobei das Verfahren die folgenden Schritte umfasst:
(i) Kombinieren von Mikrokapseln, die eine Polymerschale und einen Kern, Clomazon umfassend, einen festen Träger und ein Ligninsulfonat aufweisen, um ein Gemisch zu bilden;
(ii) Bilden von Granulaten aus dem resultierenden Gemisch;
(iii) Auftragen einer Zusammensetzung, die ein Ligninsulfonat umfasst, um die Granulate zu überziehen; und
(iv) Trocknen der so überzogenen Granulate.

14. Verfahren nach Anspruch 13, wenn abhängig von Anspruch 1, wobei das Ligninsulfonat in einer Menge von 0,2 bis 15 Gew.-% der Fertiggranulate vorliegt.

15. Verfahren nach Anspruch 13 oder Anspruch 14, wobei das in Schritt (i) gebildete Gemisch weiter ein Dispergiermittel umfasst, das aus sulfonierten und nichtsulfonierten Ligninpolymeren, sulfonierten Naphthalinverbindungen und Polyacrylatsalzen ausgewählt ist.

16. Verfahren nach einem der Ansprüche 13 bis 15, wobei in Schritt (iii) die Granulate mit einer Lösung, Aufschlämmung oder Aufschwemmung des Ligninsulfonatmaterials in einem Lösemittel behandelt werden, und das Lösemittel vorzugsweise Wasser ist

17. Verfahren nach einem der Ansprüche 13 bis 16, wobei von 5 bis 75 % des Gesamtligninsulfonatgehalts der Fertiggranulate in Schritt (iii) aufgetragen wird.

18. Verfahren nach einem der Ansprüche 13 bis 17, wobei in Schritt (iii) ein Dispergiermittel auf die Granulate aufgetragen wird, und wobei wahlweise ein Dispergiermittel im Gemisch von Schritt (i) bereitgestellt wird und das in Schritt (iii) aufgetragene Dispergiermittel dasselbe ist wie das in Schritt (i) bereitgestellte Dispergiermittel, und wobei vorzugsweise von 5 bis 75 Gew.-% des in den Fertiggranulaten vorliegenden Dispergiermittels in Schritt (iii) bereitgestellt wird.

19. Verfahren nach einem der Ansprüche 13 bis 18, wobei die Fertiggranulate von 0,5 bis 20 Gew.-% Dispergiermittel umfassen.

20. Granularformulierung, umfassend Clomazon, die durch das Verfahren nach einem der vorstehenden Ansprüche erhältlich ist.

21. Verwendung einer durch das Verfahren nach einem der Ansprüche 1 bis 19 hergestellten Granularformulierung bei der Behandlung von unerwünschtem Pflanzenwachstum.

22. Verfahren zum Steuern von Pflanzenwachstum an einer Stelle, wobei das Verfahren Auftragen von Granulaten, die nach einem Verfahren nach einem der Ansprüche 1 bis 19 hergestellt wurden, auf die Stelle umfasst.

## Revendications

1. Procédé de préparation d'une formulation comprenant de la clomazone, le procédé comprenant les étapes consistant à :
(i) combiner des microcapsules présentant une enveloppe polymère et un noyau comprenant de la clomazone, un support solide et une lignine sulfonée ou un sulfonate de naphtalène pour former un mélange ;
(ii) former des granulés à partir du mélange résultant ;
(iii) appliquer une composition comprenant une lignine sulfonée ou un sulfonate de naphtalène pour enduire les granulés ; et
(iv) sécher les granulés ainsi enduits.

2. Procédé selon la revendication 1, dans lequel le support comprend un sel de métal ou une argile, de préférence un sel d'un métal des Groupes IA, IIA ou IIIA du Tableau Périodique des Éléments, plus préférentiellement un sel de calcium, de magnésium ou d'aluminium, et dans lequel le sel de métal est un oxyde, un carbonate, un sulfate, ou un silicate.

3. Procédé selon la revendication 1 ou 2, dans lequel le support est fourni à l'étape (i) en une quantité pour former de 20 à 98 % en poids des granulés finis.

4. Procédé selon l'une quelconque des revendications 1 à 3, dans lequel les granulés finis comprennent de 0,5 à 20 % en poids d'une lignine sulfonée ou d'un sulfonate de naphtalène.

5. Procédé selon l'une quelconque des revendications 1 à 4, dans lequel le mélange formé à l'étape (i) comprend en outre un solvant, et de préférence le solvant est l'eau.

6. Procédé selon l'une quelconque des revendications 1 à 5, dans lequel le mélange formé à l'étape (i) comprend en outre un liant, qui comprend un matériau choisi parmi des farines, amidons, gommes, alcools, lipides, dérivés de cellulose, alginates, extraits de bois, lignine et dérivés de lignine.

7. Procédé selon l'une quelconque des revendications 1 à 6, dans lequel les granulés sont formés à l'étape (ii) par une procédure comprenant une granulation, un compactage, un séchage par pulvérisation, une agglomération à lit fluidisé ou extrusion, et sont de préférence formés par extrusion du mélange.

8. Procédé selon l'une quelconque des revendications 1 à 7, dans lequel les granulés sont traités à l'étape (iii) avec une solution, un mélange semi-liquide ou une suspension de la lignine sulfonée ou de sulfonate de naphtalène dans un solvant, et de préférence le solvant est l'eau.

9. Procédé selon l'une quelconque des revendications 1 à 8, dans lequel la lignine sulfonée ou le sulfonate de naphtalène appliqué(e) aux granulés à l'étape (iii) est identique à la lignine sulfonée ou au sulfonate de naphtalène inclus(e) dans le mélange à l'étape (i) et/ou dans lequel de 5 à 75 % de la teneur totale en lignine sulfonée ou sulfonate de naphtalène dans les granulés finis sont appliqués à l'étape (iii).

10. Procédé selon l'une quelconque des revendications 1 à 9, dans lequel un liant est appliqué sur les granulés à l'étape (iii), et facultativement dans lequel un liant est prévu dans le mélange de l'étape (i) et le liant appliqué à l'étape (iii) est identique au liant fourni à l'étape (i), et de préférence dans lequel de 5 à 75 % en poids du liant présent dans les granulés finis sont fournis à l'étape (iii).

11. Procédé selon l'une quelconque des revendications 1 à 10, dans lequel le liant est présent dans les granulés finis en une quantité de 0,2 à 15 % en poids.

12. Procédé selon l'une quelconque des revendications 1 à 11, dans lequel les granulés sont séchés à l'étape (iv) pour fournir aux granulés finis une teneur en solvant de 0,5 à 15 % en poids.

13. Procédé de préparation d'une formulation comprenant de la clomazone selon l'une quelconque des revendications précédentes, le procédé comprenant les étapes consistant à :
(i) combiner des microcapsules présentant une enveloppe polymère et un noyau comprenant de la clomazone, un support solide et un lignosulfonate pour former un mélange ;
(ii) former des granulés à partir du mélange résultant ;
(iii) appliquer une composition comprenant un lignosulfonate pour enduire les granulés ; et
(iv) sécher les granulés ainsi enduits.

14. Procédé selon la revendication 13, lorsqu'elle dépend de la revendication 1, dans lequel le lignosulfonate est présent en une quantité de 0,2 à 15 % en poids des granulés finis.

15. Procédé selon la revendication 13 ou la revendication 14, dans lequel le mélange formé à l'étape (i) comprend en outre un dispersant choisi parmi des polymères de lignine sulfonée et non sulfonée, des composés de naphtalène sulfoné et des sels de polyacrylate.

16. Procédé selon l'une quelconque des revendications 13 à 15, dans lequel les granulés sont traités à l'étape (iii) avec une solution, un mélange semi-liquide ou une suspension du matériau de lignosulfonate dans un solvant, et de préférence le solvant est de l'eau.

17. Procédé selon l'une quelconque des revendications 13 à 16, dans lequel de 5 à 75 % de la teneur totale en lignosulfonate des granulés finis sont appliqués à l'étape (iii).

18. Procédé selon l'une quelconque des revendications 13 à 17, dans lequel un dispersant est appliqué aux granulés à l'étape (iii), et facultativement dans lequel un dispersant est fourni dans le mélange de l'étape (i) et le dispersant appliqué à l'étape (iii) est identique au dispersant fourni à l'étape (i) et de préférence dans lequel 5 à 75 % en poids du dispersant présent dans les granulés finis sont fournis à l'étape (iii).

19. Procédé selon l'une quelconque des revendications 13 à 18, dans lequel les granulés finis comprennent de 0,5 à 20 % en poids de dispersant.

20. Formulation granulaire comprenant de la clomazone pouvant être obtenue par le procédé selon l'une quelconque des revendications précédentes.

21. Utilisation d'une formulation granulaire préparée par le procédé selon l'une quelconque des revendications 1 à 19 dans le traitement d'une croissance indésirable de végétaux.

22. Procédé pour commander une croissance de végétaux au niveau d'un locus, le procédé comprenant une application aux granulés de locus préparés par un procédé selon l'une quelconque des revendications 1 à 19.
